(19) Europäisches Patentamt
European Patent Office
Office européen des brevets

(11) Veröffentlichungsnummer : **0 522 403 B1**

# EUROPÄISCHE PATENTSCHRIFT

(12)

(45) Veröffentlichungstag der Patentschrift : **01.06.94 Patentblatt 94/22**

(51) Int. Cl.$^5$ : **A01N 47/38,** // (A01N47/38, 43:653)

(21) Anmeldenummer : **92110966.6**

(22) Anmeldetag : **29.06.92**

(54) **Fungizide Mischung.**

(30) Priorität : **06.07.91 DE 4122474**

(43) Veröffentlichungstag der Anmeldung : **13.01.93 Patentblatt 93/02**

(45) Bekanntmachung des Hinweises auf die Patenterteilung : **01.06.94 Patentblatt 94/22**

(84) Benannte Vertragsstaaten : **AT BE CH DE DK ES FR GB GR IT LI NL PT SE**

(56) Entgegenhaltungen :
**EP-A- 0 040 007**
**EP-A- 0 072 156**
**EP-A- 0 196 038**
**EP-A- 0 235 082**
**EP-A- 0 425 857**

(56) Entgegenhaltungen :
**BRIGHTON CROP PROTECTION CONFERENCE, PESTS AND DISEASES Nr. 2, 1990, THORNTON HEATH, GB; Seiten 837 - 845 A. AKERS ET AL. 'Uptake, transport and mode of action of BAS 480F, a new triazole fungicide'**
**BRITISH CROP PROTECTION CONFERENCE - PESTS AND DISEASES, PROCEEDINGS Nr. 2, 1986, LONDON; GB Seiten 539 - 546 S.J.KENDALL 'Cross-resistance of triadimenol-resistant fungal isolates to other sterol C-14 demethylation inhibitor fungicides'**

(73) Patentinhaber : **BASF Aktiengesellschaft**
**Carl-Bosch-Strasse 38**
**D-67063 Ludwigshafen (DE)**

(72) Erfinder : **Seele, Rainer, Dr.**
**Leiblstrasse 3**
**W-6701 Fussgoenheim (DE)**
Erfinder : **Saur, Reinhold, Dr.**
**Koenigsberger Strasse 9**
**W-6737 Boehl-Iggelheim (DE)**
Erfinder : **Schelberger, Klaus**
**Traminerweg 2**
**W-6701 Goennheim (DE)**
Erfinder : **Speakman, John-Bryan, Dr.**
**In den Hahndornen 7**
**W-6719 Bobenheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die vorliegende Erfindung betrifft fungizide Mischungen mit synergistischer fungizider Wirkung und Verfahren zur Bekämpfung von Pilzen mit diesen Mischungen.

Es ist bekannt, 2-(1,2,4-Triazol-1-ylmethyl)-2-(4-fluorphenyl)-3-(2-chlorphenyl)-oxiran der Formel

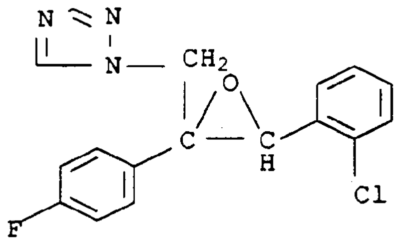

I

oder eines seiner Salze als Fungizid zu verwenden (EP 196 038). Es ist ferner bekannt, den Wirkstoff 1-[N-n-Propyl-N-2-(2,4,6-trichlor-phenoxy)-ethylcarbamoyl]imidazol (Prochloraz) der Formel

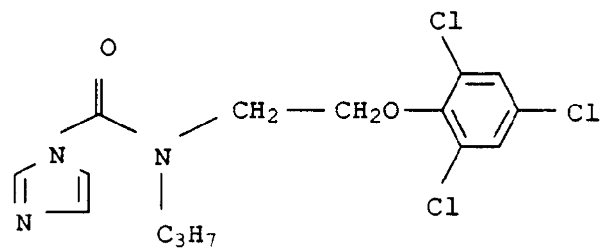

II

oder seine Metallkomplexverbindungen als Fungizide zu verwenden (EP 40 007).

Es wurde nun gefunden, daß eine Mischung aus

a) 2-(1,2,4-Triazol-1-ylmethyl)-2-(4-fluorphenyl)-3-(2-chlor-phenyl)-oxiran der Formel I

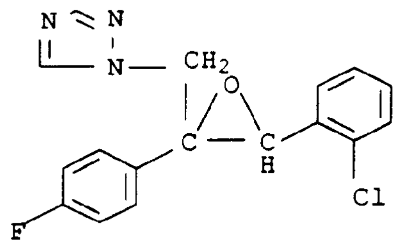

I

und

b) 1-[N-n-Propyl-N-2-(2,4,6-trichlorphenoxy)-ethylcarbamoyl]imidazol

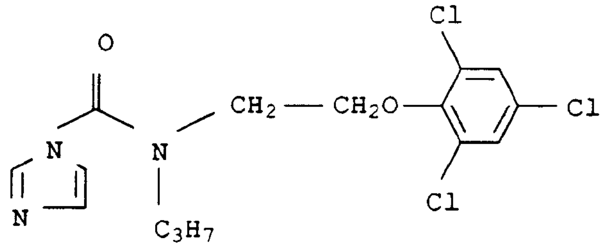

II

eine synergistische fungizide Wirkung hat. Das Mischungsverhältnis (Gewichtsverhältnis) der Verbindungen a) und b) wird so gewählt, daß eine synergistische fungizide Wirkung auftritt, beispielsweise Verbindung a) : Verbindung b) wie 5 : 1 bis 1 : 5, insbesondere 3 : 1 bis 1 : 3, vorzugsweise 2 : 1 bis 1 : 2. Die synergistische Wirkung der Mischung zeigt sich darin, daß die fungizide Wirkung der Mischung a) + b)

größer ist als die Summe der fungiziden Wirkungen von a) und von b).

2-(1,2,4-Triazol-1-ylmethyl)-2-(4-fluorphenyl)-3-(2-chlorphenyl)-oxiran, die Komponente a), kann in vier stereoisomeren Formen vorliegen, die unterschiedliche fungizide Wirkung haben. Bevorzugt werden die beiden cis-Isomeren, d.h. jene Enantiomeren, bei denen die Triazolylmethylgruppe und die 2-Chlorphenylgruppe auf der gleichen Seite des Oxiranringes stehen.

Die Erfindung schließt Gemische reiner Isomeren der Verbindung a) mit b) ein, insbesondere Gemische aus einem cis-Enantiomeren des 2-(1,2,4-Triazol-1-ylmethyl)-2-(4-fluorphenyl)-3-(2-chlorphenyl)-oxiran mit dem 1-[N-n-Propyl-N-2-(2,4,6-trichlorphenoxy)-ethylcarbamoyl]imidazol.

Die Erfindung schließt auch Mittel ein, bei denen die Wirkstoff-Komponente a) 2-(1,2,4-Triazol-1-ylmethyl)-2-(4-fluorphenyl)-3-(2-chlorphenyl)-oxiran, überwiegend in Form der beiden cis-Enantiomeren vorliegt.

Die Wirkstoffe der Formeln a) und b) können auch in Form ihrer Salze oder Metallkomplexe vorliegen. Auch diese Mischungen werden von der Erfindung umfaßt.

Salze werden hergestellt durch Umsetzung mit Säuren z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Trifluoressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalin-disulfonsäure.

Metallkomplexe können wahlweise nur eine Komponente a) oder eine Komponente b) oder auch mehrere Komponenten b) enthalten. Es lassen sich auch Metallkomplexe herstellen, die beide Komponenten a) und b) miteinander in einem gemischten Komplex enthalten.

Metallkomplexe werden hergestellt aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Metalle der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink. Bevorzugt werden die Nebengruppen-Elemente der 4. Periode und insbesondere Kupfer. Die Metalle können dabei in den verschiedenen ihnen zukommenden Wertigkeiten vorliegen. Die Metallkomplexe können ein- oder mehrkernig auftreten, d.h. sie können einen oder mehrere organische Molekülanteile als Liganden enthalten, wie etwa Mischkomplexe aus 2-(1,2,4-Triazol-1-ylmethyl)-2-(4-fluorphenyl)-3-(2-chlorphenyl)-oxiran und 1-[N-n-Propyl-N-2-(2,4,6-trichlorphenoxy)-ethylcarbamoyl]imidazol.

In der Praxis setzt man vorteilhaft die reinen Wirkstoffe a) und b) ein, denen man auch weitere agrarchemische Aktivsubstanzen wie Insektizide, Akarizide, Nematizide, Herbizide, weitere Fungizide, Wachstumsregulatoren und/oder Düngemittel zufügen kann.

Die erfindungsgemäßen fungiziden Mischungen können beispielsweise in Form von direkt versprühbaren Lösungen, Pulvern, Suspensionen, auch hochprozentigen wäßrigen, öligen oder sonstigen Suspension oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feine Verteilung der erfindungsgemäßen Wirkstoffe gewährleisten.

Normalerweise werden die Pflanzen mit den Mischungen besprüht oder bestäubt oder die Samen der Pflanzen mit den Mischungen behandelt.

Die Formulierungen werden in bekannter Weise hergestellt, z.B. durch Verstrecken der Mischung mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmitteln als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und

seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Mischungen zeichnen sich durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Verbindungen werden angewendet, indem man die Pilze oder die vor Pilzbefall zu schützenden Saatgüter, Pflanzen, Materialien oder den Erdboden mit einer fungizid wirksamen Menge der Mischungen behandelt.

Die Anwendung erfolgt vor oder nach der Infektion der Materialien, Pflanzen oder Samen durch die Pilze.

Speziell eignen sich die Mischungen zur Bekämpfung folgender Pflanzenkrankheiten:

Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die neuen Mischungen können auch im Materialschutz (Holzschutz) eingesetzt werden, z.B. gegen Paecilomyces variotii.

Die fungizieden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise 0,01 bis 10 g je Kilogramm Saatgut benötigt.

Beispiel

Versuch 1 + 2

Prüfung der eradikativen fungiziden Wirkung gegen Halmbrucherkrankung an Weizen

Weizenpflanzen der Sorte "Rektor" wurden im 3-Blattstadium mit dem Halmbrucherreger Pseudocercosporella herpotrichoides inokuliert und 10 Tage nach der Inokulation (Befallssymptome an den Blattscheiden bzw. an den Koleoptilen gerade erkennbar) mit den wäßrigen Wirkstoffaufbereitungen in den angegebenen Konzentrationen behandelt. Die Wassermenge war 400 l/ha.

Die Pflanzen wurden im Gewächshaus für 30 Tage bei 5 - 10°C kultiviert. Danach erfolgte die Auswertung durch Abschätzen der befallenen Fläche und Befallsintensität am Halmgrund ausgedrückt durch die Befallswerte von 0 bis 100. (0 = ohne Befall; 100 = Halmgrund völlig vermorscht). Diese Werte wurden in Wirkungsgrade umgerechnet. Befallswert 0 ist Wirkungsgrad 100 und Befallswert 100 ist Wirkungsgrad 0. Die zu erwartenden Wirkungsgrade der Wirkstoffkombinationen wurden nach der Colby-Formel*) ermittelt und mit den beobachteten Wirkungsgraden verglichen. Sie sind als Ergebnis der Versuche 1 und 2 dargestellt.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

*) Colby, S.R. "Calculating synergistic and antagonistic responses of herbicide combinations", Weeds, 15, S. 20 - 22, 1967

$$\text{Colby - Formel} \qquad E = X + Y - \frac{xy}{100}$$

E = zu erwartender Wirkungsgrad, ausgedrückt in % der unbehandelten Kontrolle, beim Einsatz der Wirkstoffe A und B in den Konzentrationen von m und n %

X = der Wirkungsgrad, ausgedrückt in % der unbehandelten Kontrolle, beim Einsatz des Wirkstoffes A in einer Konzentration von m %

Y = der Wirkungsgrad, ausgedrückt in % der unbehandelten Kontrolle, beim Einsatz des Wirkstoffes B in einer Konzentration von n %.

Versuch 1:

Pseudocercosporella herpotrichoides-Test an Weizen eradikativ

| Wirkstoff | Wirkstoffkonzentration in der Spritzbrühe in % | Wirkungsgrad in % der unbehandelten Kontrolle |
|---|---|---|
| Kontrolle (unbehandelt) | - | 0 |
| I. | 0,05 | 28 |
| II. | 0,05 | 35 |

| Wirkstoff | Wirkstoffkonzentration in der Spritzbrühe in % | Wirkungsgrad in % der unbehandelten Kontrolle |
|---|---|---|
| Erfindungsgemäße Mischung | | |
| I + II Mischung 1:3 | 0,01 + 0,03 | 68 |
| I + II Mischung 3:1 | 0,03 + 0,01 | 64 |

Das Ergebnis zeigt, daß 0,04 % (0,01 + 0,03 bzw. 0,03 + 0,01) der Mischung eine bessere fungizide Wirkung zeigt als 0,05 % der Einzelwirkstoffe.

In Parallelversuchen wurden als Erreger Stämme von Pseudocercosporella herpotrichoides getestet, die gegen den bekannten fungiziden Wirkstoff Carbendazim resistent oder nichtresistent waren. Die beschriebenen Fungizidmischungen waren gegen beide Erregergruppen gleichgut wirksam.

Versuch 2:

Pseudocercosporella herpotrichoides-Test an Weizen eradikativ

| Wirkstoff | Wirkstoffkonzentration in der Spritzbrühe in % | Wirkungsgrad in % der unbehandelten Kontrolle |
|---|---|---|
| Kontrolle (unbehandelt) | - | 0 |
| I. | 0,1 | 62 |
| | 0,05 | 25 |
| II. | 0,1 | 65 |
| | 0,05 | 33 |
| Erfindungsgemäße Mischung | beobachteter Wirkungsgrad | berechneter Wirkungsgrad*) |
| I + II 0,05 + 0,05 Mischung 1:1 | 85 | 49,7 |
| I + II 0,1 + 0,1 Mischung 1:1 | 100 | 86,7 |
| I + II 0,1 + 0,05 Mischung 2:1 | 100 | 74,5 |
| I + II 0,05 + 0,1 Mischung 1:2 | 100 | 73,7 |

*) Berechnet nach der Colby-Formel

Aus den Ergebnissen des Versuches geht hervor, daß der beobachtete Wirkungsgrad in allen Mischungsverhältnissen höher ist als der nach der Colby-Formel vorausberechnete Wirkungsgrad.

In Parallelversuchen wurden als Erreger Stämme von Pseudocercosporella herpotrichoides getestet, die gegen den bekannten fungiziden Wirkstoff Carbendazim resistent oder nichtresistent waren. Die beschriebenen Fungizidmischungen waren gegen beide Erregergruppen gleichgut wirksam.

## Patentansprüche

**1.** Fungizides Mittel, enthaltend eine fungizid Wirksame Menge einer Mischung aus
2-(1,2,4-Triazol-1-ylmethyl)-2-(4-fluorphenyl)-3-(2-chlorphenyl)-oxiran der Formel I

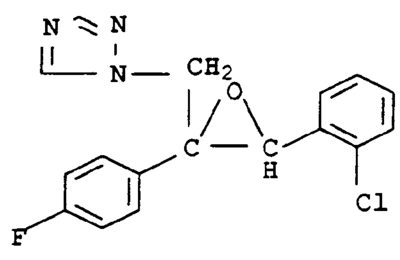

I

und
1-[N-n-Propyl-N-2-(2,4,6-trichlorphenoxy)-ethylcarbamoyl]imidazol

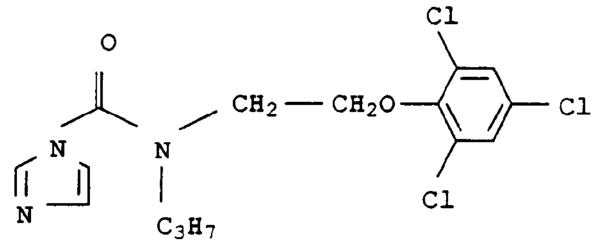

II

in einem eine synergistische Wirkung erzeugenden Gewichts verhältnis

2. Verfahren zur Bekämpfung von Pilzen, dadurch gekennzeichnet, daß man eine fungizid Wirksame Menge einer Mischung aus

2-(1,2,4-Triazol-1-ylmethyl)-2-(4-fluorphenyl)-3-(2-chlorphenyl)-oxiran der Formel I

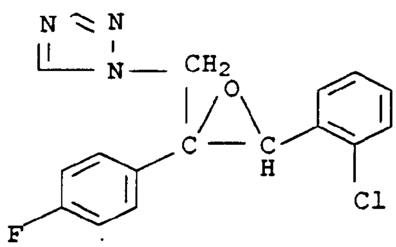

I

und

1-[N-n-Propyl-N-2-(2,4,6-trichlorphenoxy)-ethylcarbamoyl]imidazol

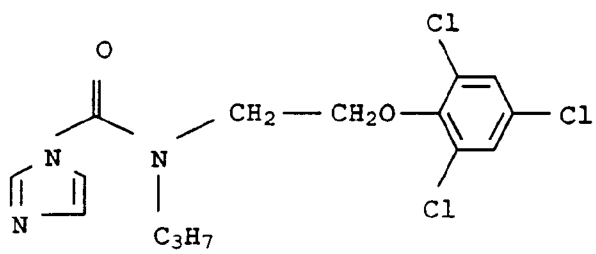

II

in einem eine synergistische Wirkung erzeugenden Gewichts verhältnis auf die Pilze oder auf die durch Pilzbefall bedrohten Materialien, Flächen, Pflanzen oder Saatgüter einwirken läßt.

3. Fungizid gemäß Anspruch 1, enthaltend die Verbindungen a) und b) im Gewichtsverhältnis a : b wie 5 : 1 bis 1 : 5.

## Claims

1. A fungicide containing a fungicidal amount of a mixture of

2-(1,2,4-triazol-1-ylmethyl)-2-(4-fluorophenyl)-3-(2-chlorophenyl)-oxirane of the formula I

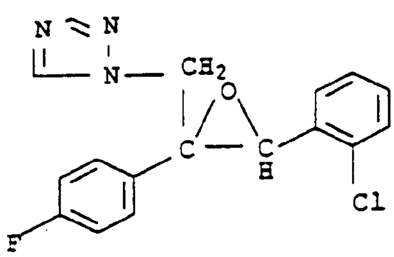

I

and
1- [N-n-propyl-N-2- (2,4,6-trichlorophenoxy)-ethylcarbamoyl]-imidazole

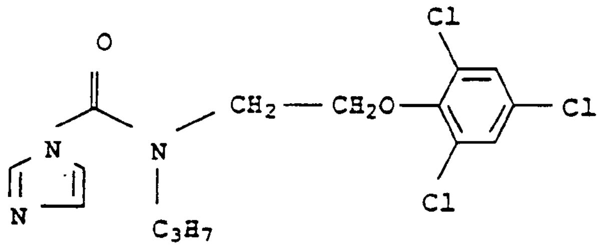

II

in a weight ratio which produces a synergistic effect.

2. A method for controlling fungi, wherein a fungicidal amount of a mixture of 2-(1,2,4-triazol-1-ylmethyl)-2-(4-fluorophenyl)-3-(2-chlorophenyl)-oxirane of the formula I

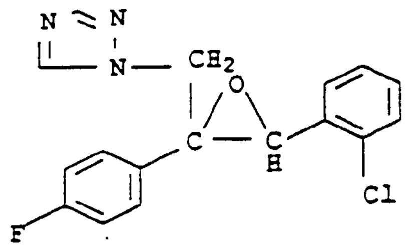

I

and
1-[N-n-propyl-N-2-(2,4,6-trichlorophenoxy)-ethylcarbamoyl]-imidazole

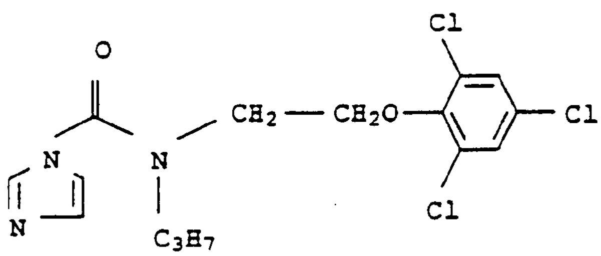

II

in a weight ratio which produces a synergistic effect, is allowed to act on the fungi or on the materials, surfaces, plants or seeds threatened by fungal attack.

3. A fungicide as claimed in claim 1, containing the compounds a) and b) in a weight ratio a : b of from 5 : 1 to 1 : 5.

## Revendications

1. Agent fongicide contenant une quantité à activité fongicide d'un mélange de

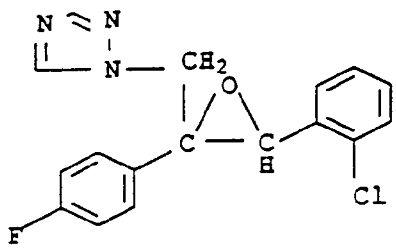

I

et de
1-[N-n-propyl-N-2-(2,4,6-trichlorophénoxy)-éthylcarbomoyl]imidazole

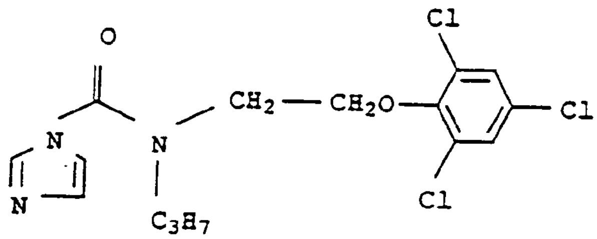

II

dans un rapport en poids produisantun effet synergétique.

2. Procédé pour lutter contre les champignons, caractérisé par le fait qu'on fait agir sur les champignons ou sur les matériaux, surfaces, plantes ou semences une quantité à activité fongicide d'un mélange de

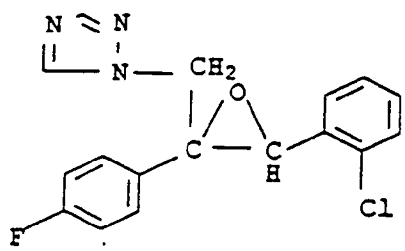

I

et de
1-[N-n-propyl-N-2-(2,4,6-trichlorophénoxy)-éthylcarbomoyl]imidazole

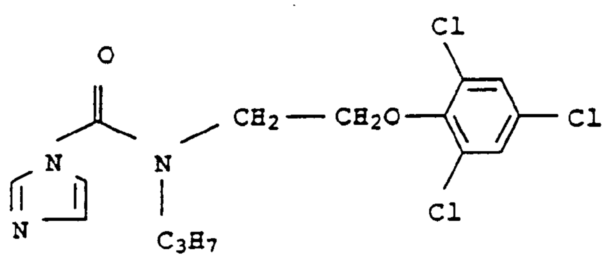

II

dans un rapport en poids produisant un effet synergétique.

3. Fongicide selon la revendication 1, contenant les composés a) et b) dans un rapport en poids a/b tel que 5/1 à 1/5.